Europäisches Patentamt

European Patent Office

Office européen des brevets

(11) Publication number: 0 393 892
A2

## EUROPEAN PATENT APPLICATION

(21) Application number: 90303730.7

(51) Int. Cl.⁵: **G01B 3/10**

(22) Date of filing: 06.04.90

(30) Priority: **17.04.89 US 339773**

(43) Date of publication of application:
**24.10.90 Bulletin 90/43**

(84) Designated Contracting States:
**AT BE CH DE DK ES FR GB IT LI NL SE**

(71) Applicant: **Cooper Industries Inc.**
**P.O. Box 4446**
**Houston Texas 77210(US)**

(72) Inventor: **Chapin, David S.**
**902 W. Johnson Street**
**Raleigh, N.C. 27605(US)**

(74) Representative: **Jackson, Peter Arthur et al**
**Gill Jennings & Every 53-64 Chancery Lane**
**GB-London WC2A 1HN(GB)**

(54) **Tape measure housing.**

(57) A tape measure housing for a power rewind tape includes a locking mechanism. The locking mechanism is activated by a button which extends through a plane formed tangentially to the top of the housing.

EP 0 393 892 A2

## TAPE MEASURE HOUSING

The present invention relates to tape measures, more particularly, the present invention relates to housings for tape measures having an automatic locking and rewind feature.

Power tapes or more specifically measuring tapes including a spring motor for causing the tape to be retracted into the housing after use have been on the market for more than twenty years. Such tapes have gained wide acceptance and have become a standard part of the tool kit of many craftsmen and artisans.

A required feature for power tapes is an internal locking mechanism which allows the user to lock the tape into position against the force of the spring motor. When the lock is released the spring motor causes the tape to be retracted into the housing.

Typically, tape measure locking mechanisms are activated by a button which is placed near the front of the tape measure housing. When it is desired to lock the tape into an extended position the user changes the position of the button. When it is desired to unlock the tape from its extended position the user then reverses the position of the button. Many of the buttons used in locking tape measures have been placed in such a position that the user must shift his hand with respect to the tape measure in order to properly activate the button. Such shifting of ones hand is inconvenient and often times may cause the user to lose his grip on the tape measure itself. Of course, the shifting of the users hand on the tape measure takes additional time and hand manipulation thus increasing user fatigue. One example of such a locking mechanism is found in US-A-3,578,259.

There is, therefore, a need in the art to provide a power tape measure wherein the user may activate the locking mechanism without shifting his hand with respect to the tape measure housing.

An ergonomic tape measure housing is formed to provide for the inclusion of a coiled tape; and a spring motor for recoiling the tape back into the housing. Also contained within the housing is a locking mechanism which is used to selectively maintain the coiled tape in an extended condition. The locking mechanism is activated by a button which extends through the side wall of the housing. The plane through which the button extends is approximately 30 degrees from the horizontal and substantially tangential the top of the housing.

A better understanding of the ergonomic tape measure housing design of the present invention may be had by reference to the drawings wherein:

Figure 1 is a perspective view of a tape measure incorporating the ergonomic tape measure housing design of the present invention; and

Figure 2 is a right side elevational view of the tape measure housing design depicted in Figure 1.

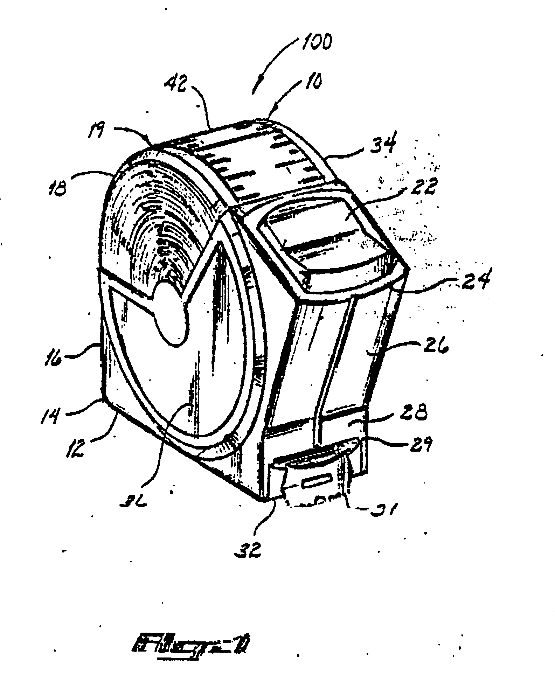

An ergonomic tape measure 100 of the present invention may be seen by reference to Figure 1. Therein it may be seen that the tape measure housing 10 includes a flat base 12 which transitions through substantially a right angle 14 into back wall 16. A back wall 16 then transitions into a smooth curve 18 which forms a top 19 of housing 10. It has been found that the use of a smooth curve such as the one shown by reference number 18 makes the tape measure more comfortable to hold.

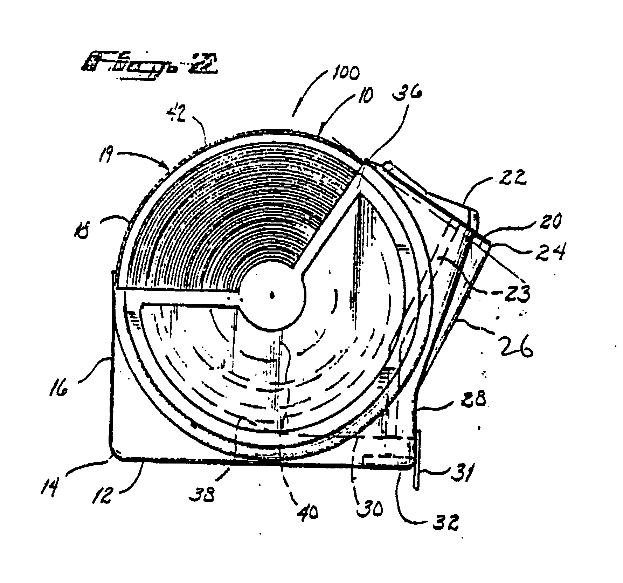

Extending tangentially to the smooth curve 18 and approximately at a 30 degree angle from the horizontal is a button plane 20. Extending through the button plane 20 is a button 22 or activating device for a locking mechanism 23, which is shown schematically in Figure 2. Such locking mechanisms 23 are well known in the art. An example of such locking mechanism may be had by reference to US-A-3,578,259. The button plane 22 transitions through a sharp angle 24 into a front wall 26 which transitions into a mouth plane 28. The plane 28 contains a mouth 29 through which the tape 30 passes as it exit the housing 10. Also contained within base 12 is a bumper assembly 32 which is well known to those skilled in the art. An example of the such bumper assembly may be seen by reference to US-A-4,479,617.

It may be seen by a comparison of Figures 1 and 2 that the tape housing has sufficient a thickness to accommodate the width of coiled tape reel 38 and spring motor 40 which are both shown schematically in Figure 2. In general terms, therefore, the tape measure housing 10 of the present invention includes a left side wall 34, a right side wall 36, and a wall 42 which forms the other perimeter of the housing 10 and separates left and right side walls, 34 and 36 respectively.

OPERATION:

The tape measure 100 is operated in the same manner as standard tape measures except when it comes to the locking tape 30 in an extended position. Specifically, the end hook 31 of the tape is placed on the end of the piece of wood article to be measured (not shown) or grasped by the user. The tape 30 is then pulled out of the tape measure housing 10. As the tape 30 exits the tape measure housing the tape 30 is pulled from the coiled tape reel 38 within the housing 10. When a sufficient amount of tape 30 has been pulled from the tape housing 10 to take the desired measurement the extended tape 30 is locked into its extended position with respect to the housing 10 by changing the position of the button 22 with finger pressure. Here is where the tape housing 10 of the present invention differs from tape measures of the prior art. Prior art tape measures generally place the lock activating button 22 in the front wall of the tape measure housing. This placement necessitates a physical movement or change in the position of the user's hand with respect to the tape measure housing in order to activate the tape measure locking mechanism. Alternately, the user must use his other hand to activate the locking button. By placing the button 22 near the top 19 of the housing 10 in the button plane 20, the user need not shift his hand or use his other hand to press the button 22 and thus activate the locking mechanism 23. This provides for quicker measurements and reduced user fatigue.

After the measurement has been taken the user need only press the opposite side of button 22 and the tape measure locking mechanism 23 is released. Once the locking mechanism 23 is released the spring motor 40 causes the tape 30 to be recoiled within the housing 10. As the speed of travel of the tape 30 into housing 10 may cause damage to the housing 10 or to the hook 31 a bumper 32 is placed in the base of the housing 10 so as to cushion the impact between end hook 31 and the housing 10 when tape 30 is being retracted.

There is thereby provided by the ergonomic tape measure housing 10 of the present invention a tape measure housing which allows the user to lock the extended tape into position or cause the tape to retract from the extended position without changing the position of the hand with respect to the tape measure housing.

## Claims

1. A tape measure comprising a housing for containing a coiled tape; means for recoiling the coiled tape contained within the housing; a locking mechanism for maintaining the coiled tape in an extended condition; the locking mechanism being contained within the housing and being activated by a button extending through a wall of the housing; and the button being placed so that the user need not shift the position of his hand in order to depress the button.

2. A tape measure comprising a coiled tape; a housing for containing the coiled tape; means for recoiling the coiled tape contained within the housing; a locking mechanism for maintaining the coiled tape in an extended condition; the locking mechanism being contained within the housing and being activated by a button extending through a wall of the housing; and the button being placed in a plane, approximately 30 degrees from the horizontal and intersecting a plane tangent to the top of the tape measure housing.

3. A tape measure comprising a coiled tape; a housing for containing the coiled tape; means for recoiling the coiled tape contained within the housing; a locking mechanism for maintaining the coiled tape in an extended condition; the locking mechanism being contained within the housing and being activated by a button extending through a wall of the housing; and the button being placed to extend through a plane substantially tangential to the top of the housing.

FIG-1

Fig. 2